# EUROPÄISCHE PATENTANMELDUNG

(11) **EP 3 075 808 A1**
(43) Veröffentlichungstag der Anmeldung: **05.10.2016**
(21) Anmeldenummer: 15162084.6
(22) Anmeldetag: 31.03.2015
(51) Int. Cl.: C09J 11/08

(54) **KUNSTSTOFFKLEBER- ODER KUNSTSTOFFBAUTEILHERSTELLUNGSVERFAHREN SOWIE HERSTELLUNGSANORDNUNG**

(71) Anmelder: Otte Kunststofftechnik GmbH, 21684 Stade (DE)
(72) Erfinder: Otte, Bernd, 21717 Fredenbeck (DE)
(74) Vertreter: Hansen, Jochen

(57) **Zusammenfassung**

Die Erfindung betrifft ein Kunststoffkleber- oder Kunststoffbauteilherstellungsverfahren, aufweisend die Schritte: Herstellen eines Staubes (1x) aus einem bereitgestellten ausgehärteten kohlenstofffaserverstärkten Kunststoff [CFK/CFRP] (11', 12', 13, 13.1 - 13.5) und Vermischen (C) des hergestellten Staubes (1 x) mit einem Kunstharz (2).

Ferner betrifft die Erfindung eine Herstellungsanordnung für einen Staub (1 x) für ein Kunststoffkleber- oder Kunststoffbauteilherstellungsverfahren.

## Beschreibung

Die Erfindung betrifft ein Kunststoffkleber- oder Kunststoffbauteilherstellungsverfahren sowie eine Herstellungsanordnung und einen Staub.

Aus dem Stand der Technik sind unterschiedliche Kunststoffkleber und Herstellungsverfahren sowie Anordnungen bekannt, um Kunststoffkleber und Kunststoffbauteile herzustellen.

In der Regel werden ein- oder zweikomponentige Kunstharzsysteme, nämlich thermoplastische oder duroplastische Harze verwendet, um entweder ganze Bauteile herzustellen oder aber Bauteile bzw. Bauteilabschnitte miteinander dauerhaft zu verbinden oder Bauteile zu reparieren bzw. diese wieder in Stand zu setzen.

Problematisch an den im Stand der Technik bekannten Kunststoffklebern ist deren mangelhafte Wärmeleitfähigkeit und mangelhafte Fliessfähigkeit. Insbesondere wenn Graphit als Füllstoff eingesetzt wird, kann dies zu erheblichen Mängeln im geklebten, reparierten oder hergestellten Bauteil führen, da unter Umständen das Harzsystem bereits abbindet ohne in alle Ecken geflossen zu sein.

Der vorliegenden Erfindung liegt die Aufgabe zugrunde, ein Kunststoffkleber- oder Kunststoffbauteilherstellungsverfahren sowie eine Herstellungsanordnung aufzuzeigen, die es ermöglichen, Kunststoffteile herzustellen, zu reparieren und/oder zu kleben bzw. zu fügen, wobei insbesondere eine sehr hohe Fliessfähigkeit des Kunststoffes vorliegen soll.

Gelöst wird diese Aufgabe mit einem Kunststoffkleber- oder Kunststoffbauteilherstellungsverfahren nach Anspruch 1 sowie einer Herstellungsanordnung nach Anspruch 9.

Das Kunststoffkleber- oder Kunststoffbauteilherstellungsverfahren weist die Schritte: Herstellen eines Staubes aus einem bereitgestellten ausgehärteten kohlenstofffaserverstärkten Kunststoff [CFK/CFRP] und Vermischen des hergestellten Staubes mit einem Kunstharz auf. Während einer Reihe von Versuchsreihen der Anmelderin wurde festgestellt, dass die Verwendung von ausgehärtetem kohlenstofffaserverstärkten Kunststoffstaub in Verbindung mit einem Kunstharz hervorragend als Kleber oder aber auch als Grundsubstanz für ein neu herzustellendes Kunststoffbauteil verwendet werden kann, da bei Verwendung von ausgehärtetem CFK-Staub eine extrem hohe Fliessfähigkeit der Staub-Harz-Mischung vorliegt, so dass selbst kleinste Risse und Poren während eines Klebe-, Füge- oder Herstellungsprozesses durch die Staub-Harz-Mischung erreicht werden können. Zudem wurde festgestellt, dass durch eine erhöhte Wärmeleitfähigkeit die Bauteilstruktur durabler ist, da an einer Klebestelle weniger Spannungen auftreten als bei bisher verwendeten Kunststoffklebern.

Der hergestellte Staub aus dem ausgehärteten kohlenstofffaserverstärkten (CFK) Kunststoff ist nur durch dieses Verfahren bzw. mittels dieser Anordnung besonders rein und gleichmäßig, da er bewusst hergestellt wird, nämlich durch explizites bewusstes Herstellen eines ausgehärteten kohlenstofffaserverstärkten Kunststoffes. Hierbei ist entscheidend, dass das gleiche Material mit den gleichen Materialeigenschaften kontinuierlich verarbeitet wird. Hierdurch ist es möglich gleichwertige Komponenten kunststoffgerecht zu verarbeiten, wobei insbesondere kein Schwund beim Herstellen von Klebeverbindungen entsteht, da dieser Staub aus dem ausgehärteten kohlenstofffaserverstärkten Kunststoff bereits einmal ausgehärtet wurde und somit quasi einmal schon geschrumpft wurde. Es zeigen sich insbesondere erhebliche Vorteile in der thermischen Leitung im Bereich der Klebestellen als auch in der strukturellen Stabilität durch den Einsatz des Staubes.

Zur Bereitstellung des ausgehärteten kohlenstofffaserverstärkten Kunststoffes kann besonders bevorzugt ein nicht ausgehärteter kohlenstofffaserverstärkter Kunststoff auf einem Träger aufgebracht und ausgehärtet werden. Dieser Träger mit dem darauf aufgebrachten ausgehärteten CFK kann dann abgeschliffen oder abgemahlen werden.

Zur Bereitstellung des ausgehärteten kohlenstofffaserverstärkten Kunststoffes kann ein ausgehärteter kohlenstofffaserverstärkter Kunststoff aus einem bereits verwendeten kohlenstofffaserverstärktem Bauteil oder Bauteilelement verwendet werden, wobei hierbei insbesondere Tellerschleifer oder Mahlgeräte zur Staubherstellung verwendet werden können. Hierbei wird bewusst auf die Sortenreinheit geachtet, so dass kein Materialmix vorliegen darf.

Zum Herstellen des Staubes kann der ausgehärtete kohlenstofffaserverstärkte Kunststoff geschliffen und der abgeschliffene Staub aufgefangen und als Staub verwendet werden.

Zum Herstellen des Staubes kann der ausgehärtete kohlenstofffaserverstärkte Kunststoff zu einem Staub gemahlen und der gemahlene Staub aufgefangen und als Staub verwendet werden.

Zum Auffangen des Staubes bietet sich insbesondere das Absaugen mit entsprechenden Saugvorrichtungen an, wobei vor dem Vermischen mit einem Kunstharz auch eine Zwischenlagerung möglich ist.

Der Staub kann in einer besonders bevorzugten Ausführungsvariante in einer Körnung von 100 bis 300 µm, mithin etwa 200 µm hergestellt werden, nämlich gemahlen oder geschliffen werden, wobei hierbei ein Schleifen mit der erfindungsgemäßen Herstellungsanordnung insbesondere bevorzugt wird.

Zum Fügen zweier Bauteilabschnitte oder zu klebender Bauteilelemente oder Bauteile kann der hergestellte Kunststoffkleber zunächst aufgetragen werden und nach dem Aufbringen auf einem zu klebenden oder zu fügenden Bauteil ausgehärtet werden. Die zu klebenden oder fügenden Bauteile können hierzu mittels eines Fertigungsmittels, insbesondere einer Positionierhilfe zueinander ausgerichtet werden, wobei im Anschluss der hergestellte Kunststoffkleber in eine gebildete Fuge eingebracht werden kann.

Aus dem vermischten Staub und Kunstharz können ganze Bauteile hergestellt werden, wobei zunächst mittels einer Form, die als Negativform des späteren Bauteils ausgestaltet ist, das Gemisch aus dem hergestellten Staub und Kunstharz hergestellt und ausgehärtet wird. Hierbei ergibt sich insbesondere der sehr wichtige Vorteil der extremen Fliessfähigkeit des aus dem Kunstharz und hergestelltem Staub bestehenden Gemisches.

Die Herstellungsanordnung für einen Staub für ein Kunststoffkleber- oder Kunststoffbauteilherstellungsverfahren umfasst:
- einen Grundträger, auf dem ausgehärtetes CFK vorgesehen werden kann,
- eine Rotationsvorrichtung zur Aufnahme des Grundträgers,
- eine Schleifanordnung, wobei die Schleifanordnung das auf dem Grundträger vorgesehene ausgehärtete CFK abschleift, während der Grundträger mittels der Rotationsvorrichtung rotiert und
- eine Auffangvorrichtung zum Auffangen des mittels der Schleifanordnung abgeschliffenen Staubes.

Insbesondere kann die Auffangvorrichtung eine Absaugung aufweisen bzw. als Absaugung ausgebildet sein, so dass abgeschliffener Staub unmittelbar abgesaugt und somit aufgefangen werden kann. Der so abgesaugte Staub kann zwischengelagert werden und bedarfsweise mit Kunstharz vermischt werden.

Besonders bevorzugt kann die Schleifanordnung als eine mit Diamanten besetzte Schleifwalze in Form eines Rundschleifers ausgebildet werden, wobei die Schleifwalze auf der zu schleifenden Oberfläche aufsetzend führbar ist, d. h. dass die sich unter der Schleifwalze quasi drehende Grundträgeranordnung mit dem darauf vorgesehenen ausgehärteten Lagen eines ausgehärteten CFK-Kunststoffes umlaufend abgeschliffen wird, wobei jedoch die Schleifwalze quasi ortsfest ist. Diesbezüglich kann auch die Absaugung quasi ortsfest angeordnet werden. Selbstverständlich führt ein Abschleifen zur Reduzierung des Durchmessers der Grundträger-CFK-Rotationswalze, so dass ein Nachführen automatisiert stattfindet bzw. immer mit dem gleichen Anpressdruck geschliffen wird.

Weiter bevorzugt ist die Schleifanordnung als Schleifscheibe aufweisende Anordnung ausgebildet, die beispielsweise auf einem Spindelantrieb entlang eines rotierenden Bauteils verfahrbar ist.

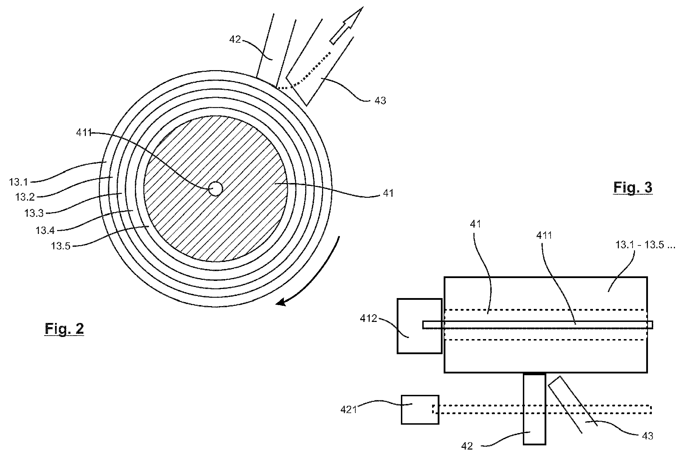

Entsprechend den im Weiteren noch erläuterten Ausführungsbeispielen gem. Fig. 2 und 3 ist auch eine besondere Ausführungsform gegebenen, wenn auf einem Grundträger, beispielsweise ein Fertigungsmittel aus Stahl oder Metall, mehrere Schichten des kohlenstofffaserverstärkten Kunststoffes aufgebracht und anschließend ausgehärtet werden. Hierzu können Materialschichtdicken beispielsweise bis zu 25 cm aufgebracht und im Anschluss mittels einer entsprechenden Schleifanordnung zu Staub produziert werden.

Die Erfindung ist insbesondere anhand der Schleifanordnung erläutert worden, da dies eine besonders bevorzugte Ausführungsvariante ist, gleichwohl besteht alternativ auch die Möglichkeit, insbesondere anwendbar für zu recycelnde CFK-Bauteile, ein Mahlen und/oder auch Schneiden von ausgehärteten CFK-Bauteilen zu verwenden, um den Staub herzustellen.

Ferner ist an dieser Stelle angemerkt, dass der Staub aus gehärtetem und reinem kohlenstofffaserverstärktem Kunststoff auch für alternative Produkte angewandt werden kann, wobei hierzu neben Kunststoffen auch Gummimischungen und bspw. Baustoffe, wie Beton und dgl. zählen können. Hierbei ist ferner wichtig, dass der Staub auch allein handelbar ist und somit eigenständig sein kann.

Nachfolgend werden Ausführungsbeispiele der Erfindung anhand der beiliegenden Zeichnungen detailliert beschrieben.

Darin zeigen:
- Fig. 1: eine schematische Darstellung eines Ausführungsbeispiels des erfindungsgemäßen Verfahrens zur Herstellung eines Kunststoffklebers bzw. eines auszuhärtenden Bauteils,
- Fig. 2: eine schematische Darstellung eines Ausführungsbeispiels der erfindungsgemäßen Herstellungsanordnung zur Herstellung eines erfindungsgemäßen Staubes und
- Fig. 3: eine schematische Darstellung eines weiteren Ausführungsbeispiels der erfindungsgemäßen Herstellungsanordnung zur Herstellung eines erfindungsgemäßen Staubes.

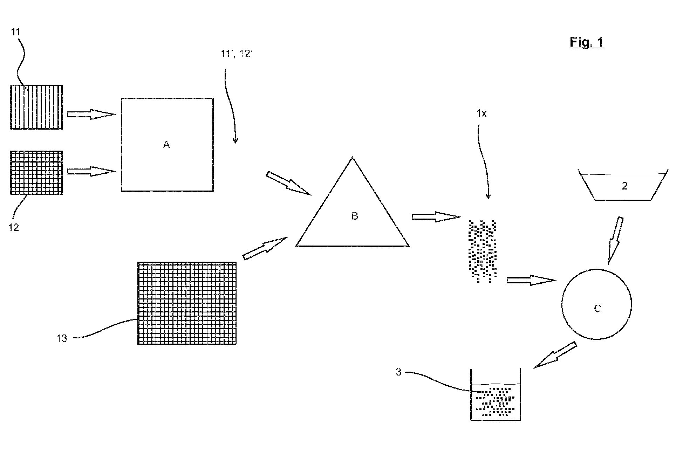

In Fig. 1 ist eine schematische Darstellung eines Ausführungsbeispiels des erfindungsgemäßen Verfahrens zur Herstellung eines Kunststoffklebers bzw. eines auszuhärtenden Bauteils dargestellt.

Das Herstellungsverfahren weist die zwei wesentlichen Schritte auf, nämlich B Herstellen eines Staubes 1 x und C Vermischen des hergestellten Staubes 1 x mit einem Kunstharz 2.

Zum Herstellen des Staubes 1 x im Verfahrensschritt B werden entweder bereits ausgehärtete CFK-Kunststoffe (auch Kunststoffbauteile) zugeführt oder aber ausgehärtete CFK-Kunststoffe aus CFK-Preprags zugeführt, nämlich unidirektionale 11 oder in Gewebeform vorliegende, nicht ausgehärtete in Harzsystemen eingebettete Kohlenstofffasern 12, einer Aushärtung A zugeführt, dort ausgehärtet.

Die noch nicht ausgehärteten CFK-Preprags 11, 12 werden in der Aushärtung, beispielsweise in einem Autoklaven oder auch nur einem Ofen, zumindest jedoch unter Wärmezufuhr ausgehärtet, so dass diese dann nur noch in ausgehärteter Form vorliegen.

In einer besonders bevorzugten Variante, entsprechend der im weiteren zu beschreibenden Figur 2, werden die Preprags auf einem Grundträger aufgewickelt und auf dem Grundträger angeordnet in einem Aushärteschritt ausgehärtet, so dass der Grundträger mit dem ausgehärteten CFK der weiteren Staubherstellung zur Verfügung steht.

In dem Verfahrensschritt B, dem Schleifen bzw. Mahlen erfolgt die eigentliche Staubherstellung des Staubes 1x aus dem ausgehärteten kohlenstofffaserverstärkten Kunststoff 11', 12', 13, 13.1 - 13.5.

Nach dem Schritt B liegt der CFK-Staub 1 x vor, der dann im weiteren Schritt C, insbesondere auch zeit- und ortsversetzt mit dem handelsüblichen Kunstharz 2 zu einem Kunststoffkleber 3 bzw. auch zu einem auszuhärtenden Bauteil 3 verarbeitet werden kann.

Das auszuhärtende Bauteil 3 muss nicht zwingend ein CFK-Bauteil sein, sondern kann insbesondere auch ein Kunststoffbauteil sein, bei dessen Herstellung normalerweise ein Füllstoff, wie Graphit oder dergleichen eingesetzt wird, wobei der Füllstoff zumindest teilweise, besonders bevorzugt vollständig mit dem Staub 1x ersetzt wird. Derartige Kunststoffbauteile 3 können beispielsweise Abwasserrohre mit einer sehr dicken Wandung sein.

Es zeigt sich bei der Verwendung des hergestellten CFK-Staubes 1x in Verbindung mit dem Kunstharz 2, dass dieses Kunstharz-CFK-Staub-Gemisch als Ganzes besonders fliessfähig ist und so insbesondere Lufteinschlüsse und Vertiefungen bzw. nicht ausgefüllte Bereiche beim Gießen vermieden bzw. nahezu ausgeschlossen sind.

Die Nutzung dieses Staubes 1x aus ausgehärteten kohlenstofffaserverstärkten Kunststoff als Füllstoff stellt eine besonders bevorzugte Verwendung und Nutzung dar, da extreme Fliessfähigkeiten mit fast allen Harzsystemen möglich sind.

Besonders bevorzugt wird bei der Herstellung eines Klebers genau das Harzsystem verwendet, aus dem die zu klebenden Kunststoff- bzw. CFK-Bauteile sind.

Fig. 2 zeigt eine schematische Darstellung eines Ausführungsbeispiels der erfindungsgemäßen Herstellungsanordnung zur Herstellung eines erfindungsgemäßen Staubes 1 x.

In einer nicht weiter dargestellten Halterung ist ein Grundträger 41 auf einer Welle 411 drehbar gelagert, wobei dieser Grundträger 41 über einen entsprechenden Antrieb in Drehrichtung (Pfeil) rotiert wird.

Auf diesem Grundträger 41 sind mehrere Lagen eines ausgehärteten CFK-Kunststoffes 13.1 bis 13.5 aufgebracht, wobei besonders bevorzugt diese Lagen zunächst im nicht ausgehärteten Zustand 11, 12 auf den Grundträger 41 aufgebracht wurden und im Anschluss zusammen mit dem Grundträger 41 einem Aushärteschritt A zugeführt wurden.

Weiter ist eine Schleifwalze 42 vorgesehen, die dem Abschleifen des ausgehärteten CFK's 13.1 bis 13.5 dient. Hierbei handelt es sich um eine Schleifwalze, die besonders bevorzugt mit Diamanten besetzt ist und über entsprechende nicht weiter dargestellte Anpressmittel, besonders bevorzugt mit dem gleichen Anpressdruck, auf der Oberfläche des ausgehärteten CFK's schleifend wirkt.

Ferner ist noch eine Absaugung 43 vorgesehen, die den durch die Schleifwalze 42 gebildeten Staub 1 x absaugt und einer weiteren Verarbeitung, insbesondere zunächst einer Sammlung zuführt.

Vom Ablauf her wird zunächst der mit dem ausgehärteten CFK in den Lagen 13.1 bis 13.5, wobei die Anzahl der Lagen nur exemplarisch ist, versehene Grundträger 41 in eine Halterung eingespannt und in Rotation versetzt. Im weiteren wird dann die Schleifwalze 42 auf die rotierende CFK-Oberfläche aufgesetzt, wobei diese beginnt den Staub 1 x aus dem ausgehärteten kohlenstofffaserverstärkten Kunststoff abzuschleifen. Dieser abgeschliffene Staub 1x wird dann über die Absaugung 43 abgesaugt und wenigstens gesammelt bzw. auch zeitlich und örtlich versetzt mit einem Kunstharz vermischt und weiter verarbeitet.

Beim Abschleifen verringert sich der Durchmesser des mit dem ausgehärteten CFK belegten Grundträgers 41, wobei die Schleifwalze 42 über entsprechende Verstellmittel diesem verringerten Durchmesser durch weitere Annäherung in Richtung der Welle 411 folgt. Da die Grundträger im Wesentlichen gleich dimensioniert sind und hiervon etliche vorliegen, wird die Schleifwalze 42 entsprechend gesteuert vor Erreichen des Grundträgers gestoppt, so dass dieser nicht beschädigt wird und der Grundträger 41 gegen einen bereits vorbereiteten, mit ausgehärteten kohlenstofffaserverstärkten Kunststoff 13.1 bis 13.5 belegten weiteren Grundträger 41 ausgetauscht werden kann, so dass der Prozess der Staubherstellung durch Schleifen weiter betrieben werden kann.

Fig. 3 zeigt eine schematische Darstellung eines weiteren Ausführungsbeispiels der erfindungsgemäßen Herstellungsanordnung zur Herstellung eines erfindungsgemäßen Staubes.

Dieses Ausführungsbeispiel zeigt eine erweiterte Darstellung der Anordnung aus Fig. 2, wobei der Grundreger 41 mit dem darauf angeordneten ausgehärteten Lagen eines ausgehärteten CFK-Kunststoffes 13.1 bis 13.5, der eine Dicke von beispielsweise bis zu 25 cm haben kann, mit einem Antrieb 412 verbunden ist und auf diese Weise rotiert bzw. gedreht werden kann.

Die Schleifwalze ist in diesem Ausführungsbeispiel eine Schleifscheibe 42, die mittels eines Spindelantriebes/Spindelmotors 421 rotiert und entlang der Oberfläche des ausgehärteten CFK-Kunststoffes geführt wird.

Die Schleifscheibe 42 hat hierzu beispielsweise einen Durchmesser von etwa 250 mm, wobei auf dessen auf dem ausgehärteten CFK-Kunststoff anliegender Oberfläche leicht beabstandete Schleifsegmente angeordnet sind, die etwa eine Ausdehnung von 20 x 10 x 10 mm aufweisen. Die einzelnen Schleifsegmente sind in einer bevorzugten Ausführung mit Diamantkörnern ausgeführt, um den ausgehärteten CFK-Kunststoff abzuschleifen. Der so hergestellte Staub aus dem ausgehärteten CFK-Kunststoff ist äußerst rein und wird über die Absaugvorrichtung 43 unmittelbar nach dem Schleifen abgesaugt und bevorratet.

Die Staubherstellung mittels Schleifen stellt lediglich eine besonders bevorzugte Ausgestaltung dar. Alternativ dazu kann auch ausgehärtetes CFK mittels anderer Schleifanordnungen, beispielsweise Tellerschleifern und dergleichen, jedoch nicht so effizient, hergestellt werden. Ebenfalls ist ein Mahlen von ausgehärtetem CFK möglich, wobei hierzu eine entsprechende Mahlanordnung den ausgehärteten kohlenstofffaserverstärkten Kunststoff in einer entsprechenden Vorrichtung mahlt und der durch das Mahlen gewonnene Staub entsprechend weiter verarbeitet wird.

### Bezugszeichenliste

- 1x: CFK-Staub
- 11: CFK-Preprag (unidirektional, nicht ausgehärtet)
- 11': ausgehärtetes CFK
- 12: CFK-Preprag (Gewebe, nicht ausgehärtet)
- 12': ausgehärtetes CFK
- 13: ausgehärtetes CFK-Bauteil
- 13.1: ausgehärtete Lage eines ausgehärteten CFK-Kunststoffes, äußerste Lage
- 13.2: ausgehärtete Lage eines ausgehärteten CFK-Kunststoffes, äußere Zwischenlage
- 13.3: ausgehärtete Lage eines ausgehärteten CFK-Kunststoffes, mittlere Lage
- 13.4: ausgehärtete Lage eines ausgehärteten CFK-Kunststoffes, innere Zwischenlage
- 13.5: ausgehärtete Lage eines ausgehärteten CFK-Kunststoffes, innerste Lage
- 2: Kunstharz/Epoxydharz
- 3: Kunststoffkleber/auszuhärtendes Bauteil
- 41: Grundträger
- 411: Welle
- 412: Antrieb
- 42: Schleifwalze / Schleifscheibe
- 421: Motor / Spindelmotor
- 43: Absaugung
- A: Aushärten
- B: Schleifen/Mahlen
- C: Mischen

## Patentansprüche

1. Kunststoffkleber- oder Kunststoffbauteilherstellungsverfahren
**aufweisend die Schritte:**
- Herstellen (B) eines Staubes (1x) aus einem bereitgestellten ausgehärteten kohlenstofffaserverstärkten Kunststoff [CFK/CFRP] (11', 12', 13, 13.1 - 13.5) und
- Vermischen (C) des hergestellten Staubes (1x) mit einem Kunstharz (2).

2. Kunststoffkleber- oder Kunststoffbauteilherstellungsverfahren nach Anspruch 1,
**dadurch gekennzeichnet, dass**
zur Bereitstellung des ausgehärteten kohlenstofffaserverstärkten Kunststoffes (11', 12', 13, 13.1 - 13.5) ein nicht ausgehärteter kohlenstofffaserverstärkter Kunststoff (11, 12) auf einem Träger (41) aufgebracht und ausgehärtet (A) wird.

3. Kunststoffkleber- oder Kunststoffbauteilherstellungsverfahren nach Anspruch 1,
**dadurch gekennzeichnet, dass**
zur Bereitstellung des ausgehärteten kohlenstofffaserverstärkten Kunststoffes (11', 12', 13, 13.1 - 13.5) ein ausgehärteter kohlenstofffaserverstärkter Kunststoff (13) aus einem bereits verwendeten kohlenstofffasserverstärktem Bauteil oder Bauteilelement (13) verwendet wird.

4. Kunststoffkleber- oder Kunststoffbauteilherstellungsverfahren nach Anspruch 1, 2 oder 3,
**dadurch gekennzeichnet, dass**
zum Herstellen des Staubes (1 x) der ausgehärtete kohlenstofffaserverstärkte Kunststoff (11', 12', 13, 13.1 - 13.5) geschliffen (B) wird und der abgeschliffene Staub (1x) aufgefangen und als Staub (1x) verwendet wird.

5. Kunststoffkleber- oder Kunststoffbauteilherstellungsverfahren nach Anspruch 1, 2 oder 3,
**dadurch gekennzeichnet, dass**
zum Herstellen des Staubes (1 x) der ausgehärtete kohlenstofffaserverstärkte Kunststoff (11', 12', 13, 13.1 - 13.5) zu einem Staub (1x) gemahlen (B) wird und der gemahlene Staub (1 x) aufgefangen und als Staub (1 x) verwendet wird.

6. Kunststoffkleber- oder Kunststoffbauteilherstellungsverfahren nach einem der vorangehenden Ansprüche,
**dadurch gekennzeichnet, dass**
der Staub (1 x) in einer Körnung von 100 bis 300 µm hergestellt wird, nämlich gemahlen oder geschliffen.

7. Kunststoffkleberherstellungsverfahren nach einem der vorangehenden Ansprüche,
**dadurch gekennzeichnet, dass**
der hergestellte Kunststoffkleber (3) nach dem Aufbringen auf einem zu klebenden oder zu fügenden Bauteil ausgehärtet wird.

8. Kunststoffbauteilherstellungsverfahren nach einem der Ansprüche 1 bis 6,
**dadurch gekennzeichnet, dass**
aus ein aus dem vermischten Staub (1 x) und Kunstharz hergestelltes Bauteil (3) ausgehärtet wird.

9. Herstellungsanordnung für einen Staub (1x) für ein Kunststoffkleber- oder Kunststoffbauteilherstellungsverfahren nach einem der vorangehenden Ansprüche, **umfassend:**
- einen Grundträger (41), auf dem ausgehärtetes CFK vorgesehen werden kann,
- eine Rotationsvorrichtung zur Aufnahme des Grundträgers (41),
- eine Schleifanordnung (42), wobei die Schleifanordnung (42) das auf dem Grundträger (41) vorgesehene ausgehärtete CFK abschleift, während der Grundträger (41) mittels der Rotationsvorrichtung (411) rotiert
und
- eine Auffangvorrichtung zum Auffangen des mittels der Schleifanordnung (42) abgeschliffenen Staubes (1 x).

10. Herstellungsanordnung nach Anspruch 9,
**dadurch gekennzeichnet, dass**
die Auffangvorrichtung eine Absaugung (43) ist.

11. Herstellungsanordnung nach Anspruch 9 oder 10,
**dadurch gekennzeichnet, dass**
die Schleifanordnung (42) eine Diamant besetzte Schleifwalze in Form eines Rundschleifers oder ein Schleifteller ist und auf der zu schleifenden Oberfläche aufsetzend führbar ist.
